# FASCICULE DE BREVET EUROPEEN

(11) **EP 3 283 794 B1**
(45) Date de publication et mention de la délivrance du brevet: **26.05.2021**
(21) Numéro de dépôt: 16718430.8
(22) Date de dépôt: 31.03.2016
(51) Int. Cl.: F16H 59/02, F16H 59/10, F16H 59/04

(54) **DISPOSITIF DE COMMANDE IMPULSIONNELLE D'UNE BOITE DE VITESSES AUTOMATIQUE**
ONE-TOUCH-STEUERUNGSVORRICHTUNG EINES AUTOMATIKGETRIEBES
ONE-TOUCH CONTROL DEVICE OF AN AUTOMATIC GEARBOX

(30) Priorité: 15.04.2015 FR 1553329
(43) Date de publication de la demande: 21.02.2018
(73) Titulaire: Renault S.A.S., 92100 Boulogne-Billancourt (FR)
(72) Inventeur: BOULICOT, Arnaud, 91470 Limours (FR)
(86) Numéro de dépôt international: PCT/FR2016/050727
(87) Numéro de publication internationale: WO 2016/166436

(56) Documents cités:
- WO-A1-2004/046585
- DE-A1- 10 209 840
- FR-A3- 3 001 521
- US-A1- 2004 259 685
- US-A1- 2008 221 760

## Description

### DOMAINE TECHNIQUE DE L'INVENTION

L'invention concerne un dispositif de commande impulsionnelle d'une boîte de vitesses automatique pilotée de véhicule automobile.

L'invention concerne plus particulièrement un dispositif de commande comportant un levier de commande apte à être manipulé par le conducteur du véhicule qui possède une position stable unique et qui, à partir de cette position stable unique, peut occuper des positions instables de sélection de différents modes de fonctionnement et d'utilisation de la boîte de vitesses du véhicule. De tels dispositifs sont connus de US 2004/259685 A1 et de WO 2004/046585 A1.

### ARRIERE PLAN TECHNIQUE DE L'INVENTION

Parmi les conceptions connues, on distingue une catégorie dans laquelle le dispositif de commande et de sélection est du type à « grille en H » à deux couloirs parallèles dont l'un est associé à des déplacements du levier de commande pour sélectionner un mode normal de fonctionnement automatique en marche avant « D » ou en marche arrière « R » et une position de sélection d'un mode dit de point mort ou neutre « N », tandis que l'autre couloir permet la sélection manuelle de différents rapports de marche avant, notamment en vue de sélection manuellement un rapport de marche avant de rang inférieur «-» ou de rang supérieur «+».

Entre ces deux couloirs longitudinaux parallèles, le levier de commande peut se déplacer dans un couloir transversal.

Un tel type de dispositif de commande impulsionnelle est un générateur de signaux électriques, qui sont produits par des moyens connus associés au levier de commande, et qui sont transmis à la boîte de vitesses automatique proprement dite.

Le dispositif de commande peut aussi comporter un dispositif d'affichage à la disposition du conducteur qui est implanté dans le tableau de bord du véhicule et/ou à proximité du levier de commande et qui affiche, à destination du conducteur, différentes informations relatives à l'état ou mode de fonctionnement de la boîte de vitesses automatique, ainsi qu'à la position du levier de commande, et aussi des informations relatives aux possibilités offertes instantanément au conducteur pour utiliser le dispositif de commande pour changer de mode automatique et/ou manuellement de rapport de marche avant.

L'invention concerne plus particulièrement un tel dispositif de commande pouvant être utilisé, en mode manuel, soit de manière dite temporaire ou ponctuelle, soit de manière permanente.

Dans un mode manuel dit temporaire, et dans un état dans lequel le mode normal automatique de marche avant D est engagé ou sélectionné, le conducteur peut souhaiter vouloir changer de rapport de manière ponctuelle, par exemple pour anticiper une situation de conduite ponctuelle.

Il peut par exemple s'agir de sélectionner un rapport de marche avant de rang inférieur pour rétrograder afin de se préparer à doubler un autre véhicule ou pour augmenter le frein moteur à disposition, par exemple lorsque le véhicule est dans une descente à forte pente.

A cet effet, au moyen du levier de commande, le conducteur sélectionne le rapport de marche avant de rang inférieur en poussant le levier de commande vers la position de sélection associée «-».

La boîte de vitesses automatique rétrograde alors immédiatement et le levier de commande revient à sa position stable unique « H » dès que le conducteur relâche l'effort qu'il lui a appliqué.

De la même manière, si le conducteur souhaite engager un rapport de marche avant de rang supérieur, dans le même couloir, il déplace le levier de commande dans le sens opposé vers la position associée «+» et la boîte de vitesses automatique provoque immédiatement le changement de rapport, puis elle est à nouveau dans le mode normal automatique de marche avant D dès que le conducteur a relâché le levier de commande.

Le dispositif de commande doit aussi permettre l'utilisation de la boîte de vitesses automatique selon un mode de commande manuel dit permanent à partir du mode normal automatique de marche avant D.

Dans cet état ou mode D, le conducteur doit pouvoir "activer" un mode manuel permanent mettant fin au mode normal automatique de marche avant D et permettant alors au conducteur d'utiliser la boîte de vitesses automatique de la même manière qu'une boîte de vitesses classique pour permettre au conducteur de décider alors lui-même de chaque changement de rapport de marche avant en déplaçant le levier de commande, ou sélecteur, dans le premier couloir associé, dans un sens ou dans l'autre, vers la position pour le passage d'un rapport de marche avant de rang supérieur «+» ou le passage d'un rapport de marche avant de rang inférieur «-».

Dans un tel dispositif à deux modes de commande manuelle temporaire ou permanent, il faut proposer au conducteur des moyens pour sélectionner l'un ou l'autre mode, et notamment pour sélectionner le mode de commande manuelle permanent.

Une première série de solutions complexes et coûteuses consiste à prévoir par exemple un bouton de commande particulier dédié à la sélection du mode de commande manuelle permanent, ou à prévoir une position géographique supplémentaire distincte dans la "grille" de sélection susceptible d'être occupée par le levier de commande.

Selon une conception connue, par exemple décrite dans le document DE-A1-19938528, une position de conduite en mode manuel permanent est prévue à gauche, ou à droite, de la position de sélection du mode normal automatique de marche avant D.

Une autre solution coûteuse, pour l'utilisation de la boîte de vitesses automatique en mode manuel temporaire, consiste à prévoir au volant des organes ou palettes pour transmettre des ordres d'engagement de rapports de marche avant de rangs supérieur ou inférieur, tout en laissant le levier de commande sur la position associée au mode normal automatique de marche avant D.

L'invention permet de proposer une solution simple et économique à ce problème.

### BREF RESUME DE L'INVENTION

Dans ce but, l'invention propose un dispositif de commande impulsionnelle d'une boîte de vitesses automatique pilotée de véhicule automobile, comportant un levier de commande :
- qui possède une position stable unique H dans laquelle il est rappelé quelle que soit la position préalablement occupée par le levier de commande ;
- qui, à partir de cette position stable unique H, peut occuper des positions de sélection de différents modes N, D, R parmi lesquelles une position D de sélection d'un mode normal automatique de marche avant, une position R de sélection d'un mode normal automatique de marche arrière, et une position N de sélection d'un mode normal de point mort N ;
- et qui, à partir de cette position stable unique H, peut occuper des positions «-»,«+» de sélection manuelle de différents rapports de marche avant ;
caractérisé en ce que :
- le dispositif ne permet la sélection manuelle d'un rapport de marche avant que lorsque ledit mode normal automatique de marche avant D a été préalablement sélectionné ;
- lorsque le levier de commande est maintenu dans une position de sélection manuelle d'un rapport de marche avant pendant une durée inférieure à une valeur de seuil prédéterminée, après relâchement du levier de commande, la boîte de vitesses revient dans ledit mode normal automatique de marche avant D ;
- lorsque le levier de commande est maintenu dans une position de sélection manuelle d'un rapport de marche avant pendant une durée supérieure à ladite valeur de seuil prédéterminée, la boîte de vitesses est dans un mode permanent de sélection manuelle d'un rapport de marche avant.

Selon d'autres caractéristiques du dispositif de commande selon l'invention :
-- le dispositif comporte un premier couloir de sélection dans lequel le levier de commande peut être déplacé manuellement et dans lequel est située ladite position stable unique à partir de laquelle le levier de commande peut être déplacé pour occuper au moins une desdites positions de sélection manuelle de différents rapports de marche avant ;
   - à partir de ladite position stable unique le levier de commande est déplacé dans la direction longitudinale dudit premier couloir :
      - dans un premier sens vers une première position de fin de course pour le passage d'un rapport manuel de marche avant rang inférieur ;
      - dans un second sens, opposé audit premier sens, vers une deuxième position de fin de course pour le passage d'un rapport manuel de marche avant de rang supérieur ;
-- lorsque la boîte de vitesses est dans un mode permanent de sélection manuelle d'un rapport de marche avant, et à partir de ladite position stable unique, le levier de commande est déplacé dans une direction transversale différente de ladite direction longitudinale, pour provoquer le retour de la boîte de vitesses dans un desdits modes automatiques ;
-- ledit déplacement du levier commande dans ladite direction transversale provoque le retour de la boîte de vitesses dans un mode normal de point mort ;
-- le dispositif comporte un deuxième couloir de sélection dans lequel le levier de commande peut être déplacé manuellement et dans lequel est située ladite position de sélection du mode normal de point mort et en ce que, à partir de ladite position de sélection du mode normal de point mort, le levier de commande peut être déplacé pour occuper au moins une autre position de sélection d'un mode automatique ;
-- à partir de ladite position de sélection du mode normal de point mort, le levier de commande est déplacé dans la direction longitudinale dudit deuxième couloir :
   - dans un premier sens vers une première position de sélection du mode normal automatique de marche arrière ;
   - dans un second sens, opposé audit premier sens, vers une deuxième position de sélection du mode normal automatique de marche avant ;
-- lesdits premier et deuxième couloirs sont parallèles ;
-- lesdits premiers sens sont identiques ;
-- lorsque la vitesse du véhicule est inférieure à une valeur de seuil de vitesse déterminée ;
   - et lorsque ledit mode normal automatique de marche avant a été préalablement sélectionné, le déplacement du levier de commande dans une position de sélection manuelle pour le passage d'un rapport manuel de marche avant de rang inférieur provoque la sélection dudit mode normal de point mort ;
-- lorsque la vitesse du véhicule est non nulle et est inférieure à une valeur de seuil de vitesse déterminée ;
   - et lorsque ledit mode normal automatique de marche avant a été préalablement sélectionné,
      le déplacement du levier de commande dans une position de sélection manuelle pour le passage d'un rapport manuel de marche avant de rang supérieur provoque la sélection dudit mode normal de point mort;
-- lorsque la vitesse du véhicule est nulle ;
   - et lorsque ledit mode normal automatique de marche avant a été préalablement sélectionné,
      le déplacement du levier de commande dans une position de sélection manuelle pour le passage d'un rapport manuel de marche avant de rang supérieur provoque le passage d'un rapport manuel de marche avant de rang supérieur ;
-- lorsque le mode normal automatique de marche arrière a été préalablement sélectionné, le déplacement du levier de commande dans une position de sélection manuelle pour le passage d'un rapport manuel de marche avant de rang inférieur provoque la sélection dudit mode normal de point mort ;
-- lorsque le mode normal automatique de marche arrière a été préalablement sélectionné, le déplacement du levier de commande dans une position de sélection manuelle pour le passage d'un rapport manuel de marche avant de rang supérieur provoque la sélection dudit mode normal de point mort ;
-- le dispositif comporte un dispositif d'affichage qui affiche la position actuellement sélectionnée, lesdites autres positions pouvant être sélectionnées, et le rapport de marche avant éventuellement sélectionné manuellement.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective d'un levier de commande d'une boîte de vitesses automatique, aussi appelé sélecteur ou levier de changement de vitesse, agencé à l'intérieur de l'habitacle d'un véhicule automobile ;
- la figure 2 est une vue schématique d'une grille de commande d'une boîte de vitesses automatiques pilotée selon l'invention ;
- la figure 3 est une vue schématique indiquant l'affichage des différentes directions de déplacement du levier de commande à l'intérieur de la grille représentée à la figure 2 ;
- les figures 4 à 6 sont des représentations analogues à celles de la figure 3 illustrant différents modes d'utilisation du dispositif de commande selon l'invention ;
- les figures 7A et 7B sont deux représentations schématiques analogues à celle de la figure 3 permettant d'illustrer deux hypothèses d'utilisation inappropriées.

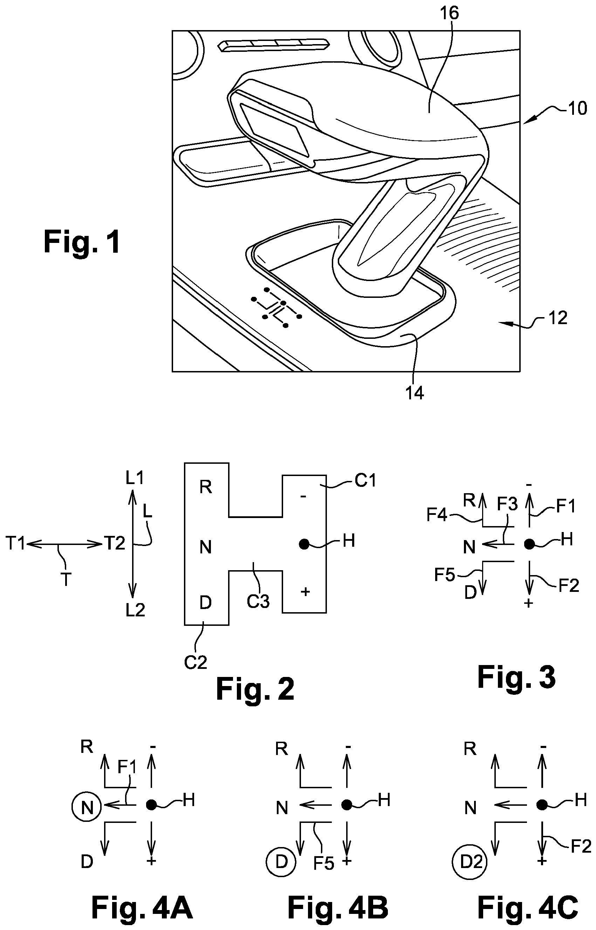

On a représenté à la figure 1 un levier de commande 10 monté mobile de manière connue dans l'habitacle d'un véhicule automobile et qui fait saillie à travers une console 12, plus précisément à travers un orifice 14.

La partie supérieure en forme de pommeau 16 est la partie de préhension qui permet au conducteur de manipuler le levier de commande 10 selon deux directions principales orthogonales, une direction longitudinale vers l'avant ou l'arrière du véhicule et une direction orthogonale transversale vers la gauche ou la droite du véhicule.

La figure 2 est une représentation schématique de la "grille" à l'intérieur de laquelle peut se déplacer le levier de commande pour atteindre et/ou occuper différentes positions.

La grille comporte, ici à droite, un premier couloir C1 d'orientation longitudinale L dans lequel le levier 10 peut se déplacer dans deux sens opposés L1 et L2.

La grille comporte un deuxième couloir C2 d'orientation longitudinale L dans lequel le levier de commande 10 peut se déplacer dans deux sens opposés L1 et L2.

Les deux couloirs longitudinaux C1 et C2 sont reliés entre eux par un troisième couloir C3 d'orientation transversale T dans lequel le levier de commande peut se déplacer dans deux sens opposés T1 et T2.

Le levier de commande 10 est susceptible d'occuper une position stable ou « Home » H qui est ici la position stable unique au sens de l'invention et qui est située au milieu du premier couloir longitudinal C1 en regard du couloir transversal C3.

En partant de la position stable H, le levier de commande peut être déplacé dans le premier couloir C1 dans le premier sens L1 de la direction longitudinale L pour atteindre la position supérieure "-" correspondant à la sélection manuelle de passage d'un rapport de marche avant de rang inférieur.

Inversement, le levier de commande 10 peut être déplacé dans le premier couloir C1 longitudinalement dans le deuxième sens L2 pour atteindre la position "+" correspondant au passage manuel d'un rapport de marche avant de rang supérieur.

A partir de la position stable unique H, le levier de commande 10 peut être déplacé selon la direction transversale T dans le premier sens T1, ici vers la gauche, dans le troisième couloir C3 en direction du deuxième couloir longitudinal C2.

Ainsi, le levier de commande 10 peut atteindre une première position "N" de sélection d'un mode normal de point mort, aussi appelé mode "Neutre".

La position N est située centralement dans le deuxième couloir longitudinal C2 qui comporte aussi une position "R" de sélection d'un mode normal automatique de marche arrière, et une position longitudinalement opposée "D" de sélection d'un mode normal automatique de marche avant.

En partant de la position stable unique H, pour atteindre la position R, le levier de commande 10 est d'abord déplacé selon la direction transversale T dans le troisième couloir C3 jusqu'à la position N, puis longitudinalement dans le deuxième couloir longitudinal C2 dans le premier sens L1 jusqu'à atteindre la position R.

De manière symétrique, la position D peut être atteinte, à partir de la position stable unique H, en déplaçant le levier de commande 10 transversalement dans le premier sens T1 jusqu'à la position N, puis longitudinalement dans le deuxième couloir longitudinal C2 dans le deuxième sens L2 jusqu'à la position D.

Quelle que soit la position de sélection occupée par le levier de commande 10 (-, +, N, R ou D), lorsque le conducteur relâche son effort d'actionnement et de manipulation appliqué au levier 10, celui-ci est rappelé automatiquement vers sa position stable H.

Les différentes directions et sens de déplacement et de manipulation possibles pour le levier 10 dans la grille de la figure 2 sont illustrés schématiquement à la figure 3.

Cette représentation de la figure 3 et des figures suivantes est par exemple celle fournies par un afficheur présent à l'intérieur de l'habitacle du véhicule automobile (non représenté en détail) à la disposition du conducteur.

Ainsi, en partant de la position stable unique H, un déplacement selon la flèche F1 permet d'atteindre la position "-", selon la flèche F2 permet d'atteindre la position "+", selon la flèche F3 permet d'atteindre la position N, selon la flèche coudée F4 permet d'atteindre la position R, et selon la flèche coudée F5 permet d'atteindre la position D.

Comme illustré à la figure 4, en partant de la position stable unique H, le déplacement selon la flèche F1 permet d'atteindre la position de point mort N.

Par exemple, à partir de la position de point mort illustrée à la figure 4A, un déplacement du levier de commande 10 selon la flèche F5 permet d'atteindre la position D, puis le levier de commande 10 est de retour à la position stable unique H.

Dans cette position et ce mode normal automatique de marche avant D de la boîte de vitesses automatique, le conducteur peut souhaiter utiliser la boîte en mode de sélection manuelle temporaire, par exemple pour passer un rapport de marche avant de rang supérieur.

A cet effet, en partant de la position stable unique H, il déplace alors le levier de commande 10 selon la flèche F2 et l'afficheur fait apparaître par exemple une indication "D2" (Si le rapport précédent engagé dans la boîte de vitesses automatique était le « D1 ») correspondant à ce rapport de marche avant de rang supérieur.

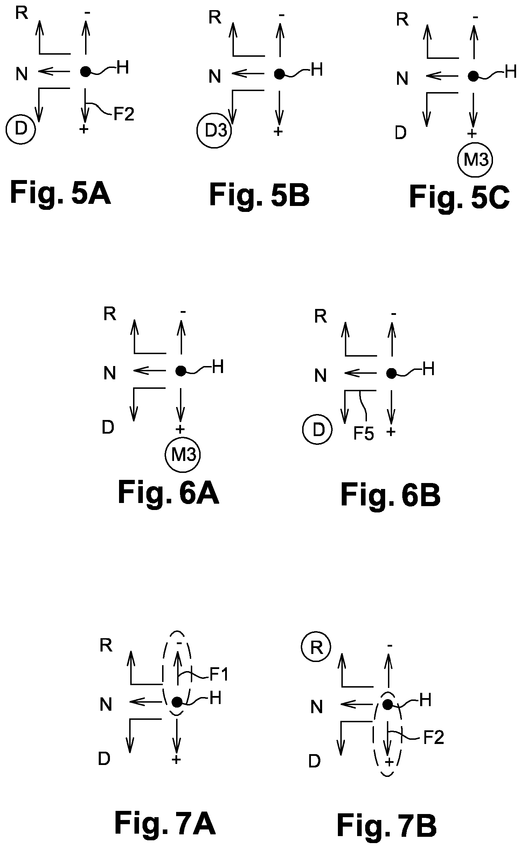

Si le conducteur relâche alors immédiatement le levier de commande, celui-ci revient dans la position stable unique H et, après quelques secondes, la boîte de vitesses automatique revient à nouveau dans son mode normal automatique de marche avant D représenté et indiqué à la figure 5A.

De la même manière (non représentée), en partant du mode et de la position représentés à la figure 4B, le conducteur a la possibilité d'utiliser la boîte en mode manuel temporaire pour engager un rapport de marche avant de rang inférieur en déplaçant le levier de commande 10 selon la flèche F1, puis en le relâchant.

Conformément à l'invention, le conducteur a la possibilité de mettre la boîte de vitesses automatique et le dispositif de commande dans un mode dit "manuel permanent" en amenant le levier de commande 10 dans l'une ou l'autre des deux positions "+" ou "-" et en maintenant le levier de commande dans l'une ou l'autre de ces deux positions pendant une durée supérieure à une valeur de seuil prédéterminée T0, par exemple égale à 600 millisecondes (600 ms).

La valeur de seuil T0 est paramétrable lors de la phase de mise au point du dispositif commande.

Ceci est illustré par exemple aux figures 5A à 5C.

En partant du mode D et de la position stable unique H, le conducteur déplace par exemple le levier de commande 10 selon la flèche F2 provoquant immédiatement l'engagement du rapport supérieur de marche avant et un affichage "D3" (Si le rapport précédent engagé dans la boîte de vitesses automatique était le « D2 »); puis le maintien dans cette position "+" au-delà de la durée T0 provoque le changement de mode pour l'utilisation du mode manuel permanent et l'affichage, comme représenté à la figure 5C, d'une indication "M3".

Une fois ce mode manuel permanent engagé, la boîte de vitesses automatique reste dans ce mode manuel permanent de marche avant, même lorsque le conducteur relâche le levier de commande 10 et que celui-ci revient à sa position stable unique H.

Dans ce mode manuel permanent, le conducteur peut selon sa volonté passer et engager successivement l'un quelconque des rapports de marche avant en agissant sur le levier de commande 10, à partir de la position stable unique H, selon les flèches F1 ou F2.

Pour quitter le mode manuel permanent illustré aux figures 5C et 6A, il suffit que, en partant de la position stable H, le conducteur déplace le levier de commande 10 vers la gauche, dans le troisième couloir transversal C3, en direction du deuxième couloir longitudinal C2 pour atteindre l'une quelconque des trois positions associées aux modes N, R ou D.

Dans l'exemple illustré aux figures 6A et 6B, à partir de la position stable unique H, le conducteur déplace le levier de commande 10 selon la flèche F5 pour atteindre la position D de façon à ce que la boîte de vitesses automatique soit à nouveau dans son mode normal automatique de marche avant D.

Comme on peut le voir à la figure 6B, la lettre D est à nouveau indiquée sur l'afficheur du tableau de bord.

Lorsque le levier de commande est maintenu dans une position de sélection manuelle d'un rapport de marche avant pendant une durée inférieure à la valeur de seuil prédéterminée T0, après relâchement du levier de commande 10, la boîte de vitesses est dans un mode temporaire de sélection manuelle d'un rapport de marche avant puis, après quelques secondes, la boîte de vitesse revient dans le mode normal automatique de marche avant.

Dans l'utilisation du dispositif de commande selon l'invention, notamment lors de manœuvres dites de "parking", il existe des situations dans lesquelles le conducteur peut souhaiter provoquer des inversions du sens de marche du véhicule, notamment en passant du mode normal automatique de marche avant D au mode normal automatique de marche R, ou inversement.

Normalement, un tel changement de sens de déplacement du véhicule s'effectue, à partir de la position stable H en déplaçant le levier de commande 10 selon l'une des flèches F4 ou F5.

On doit envisager le cas d'un usage non conforme ou erroné du dispositif de commande selon l'invention dans lequel par exemple, comme illustré schématiquement à la figure 7A, alors que le mode normal automatique de marche avant D est sélectionné, le conducteur déplace directement le levier de commande 10 selon la flèche F1 sans suivre le trajet coudé conforme à la flèche F4.

Inversement, comme cela est illustré à la figure 7B, alors que la mode normal automatique de marche arrière R est sélectionné, pour passer en marche avant, il est possible que le conducteur déplace le levier de commande 10, à partir de la position stable unique H, selon la flèche F2, sans suivre le trajet conforme à la flèche F5.

Conformément à un aspect complémentaire de l'invention, une solution est apportée en mettant la boîte de vitesses automatique dans son état normal de point mort ou neutre N en prenant en compte l'hypothèse selon laquelle - lorsque le mode normal de marche avant automatique D ou de marche arrière automatique R est engagé - tout déplacement du levier de commande 10 vers l'une des positions "-" ou "+" est analysée une erreur de manipulation du levier de commande 10 lorsque le véhicule est à basse ou très basse vitesse, c'est-à-dire lorsque le véhicule roule à une vitesse inférieure à une valeur de seuil prédéterminée de vitesse V0.

Si la vitesse du véhicule est supérieure à la valeur de seuil V0 et que le mode normal automatique de marche avant D est engagé, le déplacement du levier de commande 10 selon les flèches F1 ou F2 pour atteindre les positions "-" ou "+" permet d'engager un rapport de marche avant correspondant en mode manuel temporaire ou en mode manuel permanent comme décrit précédemment.

Si la vitesse du véhicule est inférieure à la valeur de seuil V0 et que le conducteur déplace le levier de commande 10 selon la flèche F1 pour atteindre la position "-", la boîte de vitesses automatique passe alors en mode normal de point mort ou mode neutre N car il est possible que le conducteur ait en fait souhaité engager le mode normal automatique de marche arrière R.

A titre complémentaire, un signal d'avertissement lumineux et/ou sonore peut être émis pour attirer l'attention du conducteur sur l'événement qui vient de se produire.

De manière symétrique, si la vitesse du véhicule est non nulle et est inférieure à la valeur de seuil V0 et que le conducteur, en partant de la position stable unique H déplace le levier de commande 10 selon la flèche F2 pour atteindre la position "+", la boîte de vitesses automatique passe en mode normal de point mort ou neutre N, ceci pour assurer une cohérence de fonctionnement.

Ici encore, un signal sonore et/ou lumineux peut être émis pour attirer l'attention du conducteur sur l'événement qui vient de se produire.

Alors que le mode normal automatique de marche avant D est sélectionné, et si le véhicule est à vitesse nulle, à l'arrêt, le déplacement par le conducteur du levier de commande 10 selon la flèche F2 pour engager un rapport de marche avant de rang supérieur est pris en compte et un tel engagement se produit car il est certain que le conducteur ne cherchait pas à engager le mode normal automatique de marche arrière R car la sélection de celui-ci aurait correspondu à une action dans le sens opposé L1.

Une telle action ou requête du conducteur à vitesse nulle du véhicule peut par exemple survenir pour engager le deuxième rapport de marche avant afin de faciliter un démarrage et une mise en mouvement du véhicule sur une surface à très faible adhérence.

Lorsque le mode normal automatique de marche arrière R de la boîte de vitesses automatique est engagé, une action du conducteur sur le levier de commande 10, en partant de la position stable unique H, pour atteindre la position "-" selon la flèche F1 n'est pas prise en compte et la boîte de vitesses automatique passe en mode normal de point mort ou neutre N car la commande en mode manuel impulsionnelle n'est pas opérationnelle en marche arrière R, et qu'il est donc préférable de procéder de la même manière que pour une demande d'engagement d'un rapport de marche avant de rang supérieur avec la position "+".

Toujours dans le mode normal automatique de marche arrière R, une action du conducteur sur le levier de commande 10 selon la flèche F2 pour atteindre la position "+" provoque le passage de la boîte de vitesses automatique en mode normal de point mort ou neutre N car il est possible que le conducteur souhaitait en fait engager le mode normal automatique de marche avant D.

L'ensemble des actions et gestions de la boîte de vitesses automatique et du dispositif de commande sont réalisés par tous moyens à disposition de l'homme de l'art, et notamment par une unité électronique de commande de la boîte de vitesses automatique qui reçoit des signaux électriques générés par le dispositif de commande, et par exemple par différents capteurs sur lesquels agit le levier de commande 10 en fonction de la position géographique qu'il occupe dans la grille de commande.

## Revendications

1. Dispositif de commande impulsionnelle d'une boîte de vitesses automatique pilotée de véhicule automobile, comportant un levier de commande (10) :
- qui possède une position stable unique (H) dans laquelle il est rappelé quelle que soit la position préalablement occupée par le levier de commande (10);
- qui, à partir de cette position stable unique (H), peut occuper des positions de sélection de différents modes (N, D, R) parmi lesquelles une position (D) de sélection d'un mode normal automatique de marche avant, une position (R) de sélection d'un mode normal automatique de marche arrière et une position (N) de sélection d'un mode normal de point mort (N) ;
- et qui, à partir de cette position stable unique (H), peut occuper des positions (+, -) de sélection manuelle de différents rapports de marche avant ;
**caractérisé en ce que** :
- le dispositif ne permet la sélection manuelle d'un rapport de marche avant (+, -) que lorsque ledit mode normal automatique de marche avant (D) a été préalablement sélectionné ;
- lorsque le levier de commande (10) est maintenu dans une position de sélection manuelle d'un rapport de marche avant pendant une durée inférieure à une valeur de seuil prédéterminée (T0), le rapport correspondant est sélectionné et après relâchement du levier de commande (10), la boîte de vitesses revient dans ledit mode normal automatique de marche avant (D) ;
- lorsque le levier de commande (10) est maintenu dans une position de sélection manuelle d'un rapport de marche avant pendant une durée supérieure à ladite valeur de seuil prédéterminée (T0), le rapport correspondant est sélectionné et la boîte de vitesses est dans un mode permanent de sélection manuelle d'un rapport de marche avant.

2. Dispositif selon la revendication 1, **caractérisé en ce qu'**il comporte un premier couloir (C1) longitudinal de sélection dans lequel le levier de commande (10) peut être déplacé manuellement et dans lequel est située ladite position stable unique (H) à partir de laquelle le levier de commande peut être déplacé pour occuper au moins une desdites positions (+, -) de sélection manuelle de différents rapports de marche avant.

3. Dispositif selon la revendication 2, **caractérisé en ce que**, à partir de ladite position stable unique (H), le levier de commande est déplacé dans la direction longitudinale (L) dudit premier couloir (C1) :
- dans un premier sens (L1) vers une première position de fin de course pour le passage d'un rapport manuel de marche avant rang inférieur (-) ;
- dans un second sens (L2), opposé audit premier sens, vers une deuxième position de fin de course pour le passage d'un rapport manuel de marche avant de rang supérieur (+).

4. Dispositif selon la revendication 1, **caractérisé en ce que**, lorsque la boîte de vitesses est dans un mode permanent de sélection manuelle d'un rapport de marche avant (D), et à partir de ladite position stable unique (H), le levier de commande est déplacé dans une direction transversale (T) différente de ladite direction longitudinale (L), pour provoquer le retour de la boîte de vitesses dans un desdits modes automatiques (N, D, R).

5. Dispositif selon la revendication 4, **caractérisé en ce que** ledit déplacement du levier commande (10) dans ladite direction transversale (T) provoque le retour de la boîte de vitesses dans un mode normal de point mort (N).

6. Dispositif selon la revendication 5, **caractérisé en ce qu'**il comporte un deuxième couloir (C2) de sélection dans lequel le levier de commande (10) peut être déplacé manuellement et dans lequel est située ladite position de sélection du mode normal de point mort (N) et **en ce que**, à partir ladite position de sélection du mode normal de point mort (N), le levier de commande (10) peut être déplacé pour occuper au moins une autre position de sélection d'un mode automatique (D, R).

7. Dispositif selon la revendication 6, **caractérisé en ce que**, à partir de ladite position de sélection du mode normal de point mort (N), le levier de commande (10) est déplacé dans la direction longitudinale dudit deuxième couloir (C2) :
- dans un premier sens (L1) vers une première position (R) de sélection du mode normal automatique de marche arrière ;
- dans un second sens (L2), opposé audit premier sens, vers une deuxième position (D) de sélection du mode normal automatique de marche avant.

8. Dispositif selon l'une des revendications 6 ou 7 prise en combinaison avec l'une des revendications 2 ou 3, **caractérisé en ce que** lesdits premier et deuxième couloirs (C1, C2) sont parallèles.

9. Dispositif selon la revendication 8 prise en combinaison avec les revendications 3 et 7, **caractérisé en ce que** lesdits premiers sens sont identiques.

10. Dispositif selon la revendication 9, **caractérisé en ce que** :
- lorsque la vitesse du véhicule est inférieure à une valeur de seuil de vitesse (V0) déterminée ;
- et lorsque ledit mode normal automatique de marche avant (D) a été préalablement sélectionné,
le déplacement du levier de commande (10) dans une position (-) de sélection manuelle pour le passage d'un rapport manuel de marche avant de rang inférieur (-) provoque la sélection dudit mode normal de point mort (N).

11. Dispositif selon la revendication 9, **caractérisé en ce que** :
- lorsque la vitesse du véhicule est non nulle et est inférieure à une valeur de seuil de vitesse (V0) déterminée ;
- et lorsque ledit mode normal automatique de marche avant (D) a été préalablement sélectionné,
le déplacement du levier de commande (10) dans une position (+) de sélection manuelle pour le passage d'un rapport manuel de marche avant de rang supérieur (+) provoque la sélection dudit mode normal de point mort (N).

12. Dispositif selon la revendication 9, **caractérisé en ce que** :
- lorsque la vitesse du véhicule est nulle ;
- et lorsque ledit mode normal automatique de marche avant (D) a été préalablement sélectionné,
le déplacement du levier de commande (10) dans une position (+) de sélection manuelle pour le passage d'un rapport manuel de marche avant de rang supérieur (+) provoque le passage d'un rapport manuel de marche avant de rang supérieur (+).

13. Dispositif selon la revendication 9, **caractérisé en ce que** lorsque le mode normal automatique de marche arrière (R) a été préalablement sélectionné, le déplacement du levier de commande (10) dans une position (-) de sélection manuelle pour le passage d'un rapport manuel de marche avant de rang inférieur (-) provoque la sélection dudit mode normal de point mort (N).

14. Dispositif selon la revendication 9, **caractérisé en ce que** lorsque le mode normal automatique de marche arrière (R) a été préalablement sélectionné, le déplacement du levier de commande (10) dans une position (+) de sélection manuelle pour le passage d'un rapport manuel de marche avant de rang supérieur (+) provoque la sélection dudit mode normal de point mort (N).

15. Dispositif selon l'une quelconque des revendications précédentes, **caractérisé en ce qu'**il comporte un dispositif d'affichage qui affiche la position sélectionnée, lesdites autres positions pouvant être sélectionnées, et le rapport de marche avant éventuellement sélectionné manuellement.

## Patentansprüche

1. Impulssteuervorrichtung für ein gesteuertes Automatikgetriebe eines Kraftfahrzeugs, umfassend einen Steuerhebel (10):
- der eine einzige stabile Stellung (H) besitzt, in die er unabhängig von der zuvor vom Steuerhebel (10) eingenommenen Stellung zurückgestellt wird;
- der, ausgehend von dieser einzigen stabilen Stellung (H), Stellungen zur Auswahl verschiedener Modi (N, D, R) einnehmen kann, darunter eine Stellung (D) zur Auswahl eines normalen automatischen Vorwärtsmodus, eine Stellung (R) zur Auswahl eines normalen automatischen Rückwärtsmodus und eine Stellung (N) zur Auswahl eines normalen Leerlaufmodus (N);
- und der, ausgehend von dieser einzigen stabilen Stellung (H), Stellungen (+, -) zur manuellen Auswahl verschiedener Vorwärtsgänge einnehmen kann;
**dadurch gekennzeichnet, dass**:
- die Vorrichtung die manuelle Auswahl eines Vorwärtsgangs (+, -) nur dann erlaubt, wenn zuvor der normale automatische Vorwärtsmodus (D) ausgewählt wurde;
- wenn der Steuerhebel (10) über eine Dauer von weniger als einem vorbestimmten Schwellenwert (T0) in einer Stellung zur manuellen Auswahl eines Vorwärtsgangs gehalten wird, der entsprechende Gang ausgewählt wird, und nach dem Loslassen des Steuerhebels (10) das Getriebe in den normalen automatischen Vorwärtsmodus (D) zurückkehrt;
- wenn der Steuerhebel (10) über eine Dauer von mehr als dem Schwellenwert (T0) in einer Stellung zur manuellen Auswahl eines Vorwärtsgangs gehalten wird, der entsprechende Gang ausgewählt wird und sich das Getriebe in einem Dauermodus zur manuellen Auswahl eines Vorwärtsgangs befindet.

2. Vorrichtung nach Anspruch 1, **dadurch gekennzeichnet, dass** sie eine erste längsverlaufende Wahlgasse (C1) umfasst, in der der Steuerhebel (10) manuell bewegt werden kann und in der sich die einzige stabile Stellung (H) befindet, aus der der Steuerhebel bewegt werden kann, um zumindest eine der Stellungen (+, -) zur manuellen Auswahl verschiedener Vorwärtsgänge einzunehmen.

3. Vorrichtung nach Anspruch 2, **dadurch gekennzeichnet, dass**, ausgehend von der einzigen stabilen Stellung (H), der Steuerhebel in der Längsrichtung (L) der ersten Gasse (C1) bewegt wird, und zwar:
- in einer ersten Richtung (L1) in eine erste Endstellung zum Schalten in einen niedrigeren manuellen Vorwärtsgang (-);
- in einer zur ersten Richtung entgegengesetzten zweiten Richtung (L2) in eine zweite Endstellung zum Schalten in einen höheren manuellen Vorwärtsgang (+).

4. Vorrichtung nach Anspruch 1, **dadurch gekennzeichnet, dass**, wenn sich das Getriebe in einem Dauermodus zur manuellen Auswahl eines Vorwärtsgangs (D) befindet, ausgehend von der einzigen stabilen Stellung (H), der Steuerhebel in einer sich von der Längsrichtung (L) unterscheidenden Querrichtung (T) bewegt wird, um die Rückkehr des Getriebes in die automatischen Modi (N, D, R) zu bewirken.

5. Vorrichtung nach Anspruch 4, **dadurch gekennzeichnet, dass** die Bewegung des Steuerhebels (10) in der Querrichtung (T) die Rückkehr des Getriebes in einen normalen Leerlaufmodus (N) bewirkt.

6. Vorrichtung nach Anspruch 5, **dadurch gekennzeichnet, dass** sie eine zweite Wahlgasse (C2) umfasst, in der der Steuerhebel (10) manuell bewegt werden kann und in der sich die Wahlstellung des normalen Leerlaufmodus (N) befindet, und dass, ausgehend von der Wahlstellung des normalen Leerlaufmodus (N), der Steuerhebel (10) bewegt werden kann, um zumindest eine andere Stellung zur Auswahl eines automatischen Modus (D, R) einzunehmen.

7. Vorrichtung nach Anspruch 6, **dadurch gekennzeichnet, dass**, ausgehend von der Wahlstellung des normalen Leerlaufmodus (N), der Steuerhebel (10) in der Längsrichtung der zweiten Gasse (C2) bewegt wird, und zwar:
- in einer ersten Richtung (L1) in eine erste Stellung (R) zur Auswahl des normalen automatischen Rückwärtsmodus;
- in einer zur ersten Richtung entgegengesetzten zweiten Richtung (L2) in eine zweite Stellung (D) zur Auswahl des normalen automatischen Vorwärtsmodus.

8. Vorrichtung nach einem der Ansprüche 6 oder 7 in Kombination mit einem der Ansprüche 2 oder 3, **dadurch gekennzeichnet, dass** die erste und die zweite Gasse (C1, C2) parallel sind.

9. Vorrichtung nach Anspruch 8 in Kombination mit den Ansprüchen 3 und 7, **dadurch gekennzeichnet, dass** die ersten Richtungen identisch sind.

10. Vorrichtung nach Anspruch 9, **dadurch gekennzeichnet, dass**:
- wenn die Geschwindigkeit des Fahrzeugs unter einem bestimmten Geschwindigkeitsschwellenwert (V0) liegt;
- und wenn zuvor der normale automatische Vorwärtsmodus (D) ausgewählt wurde,
die Bewegung des Steuerhebels (10) in eine Stellung (-) zur manuellen Auswahl zum Schalten in einen niedrigeren manuellen Gang (-) die Auswahl des normalen Leerlaufmodus (N) bewirkt.

11. Vorrichtung nach Anspruch 9, **dadurch gekennzeichnet, dass**:
- wenn die Geschwindigkeit des Fahrzeugs ungleich Null ist und unter einem bestimmten Geschwindigkeitsschwellenwert (V0) liegt;
- und wenn zuvor der normale automatische Vorwärtsmodus (D) ausgewählt wurde,
die Bewegung des Steuerhebels (10) in eine Stellung (+) zur manuellen Auswahl zum Schalten in einen höheren manuellen Gang (+) die Auswahl des normalen Leerlaufmodus (N) bewirkt.

12. Vorrichtung nach Anspruch 9, **dadurch gekennzeichnet, dass**:
- wenn die Geschwindigkeit des Fahrzeugs Null ist;
- und wenn zuvor der normale automatische Vorwärtsmodus (D) ausgewählt wurde,
die Bewegung des Steuerhebels (10) in eine Stellung (+) zur manuellen Auswahl zum Schalten in einen höheren manuellen Gang (+) das Schalten in einen höheren manuellen Gang (+) bewirkt.

13. Vorrichtung nach Anspruch 9, **dadurch gekennzeichnet, dass**, wenn zuvor der normale automatische Rückwärtsmodus (R) ausgewählt wurde, die Bewegung des Steuerhebels (10) in eine Stellung (-) zur manuellen Auswahl zum Schalten in einen niedrigeren manuellen Vorwärtsgang (-) die Auswahl des normalen Leerlaufmodus (N) bewirkt.

14. Vorrichtung nach Anspruch 9, **dadurch gekennzeichnet, dass**, wenn zuvor der normale automatische Rückwärtsmodus (R) ausgewählt wurde, die Bewegung des Steuerhebels (10) in eine Stellung (+) zur manuellen Auswahl zum Schalten in einen höheren manuellen Vorwärtsgang (+) die Auswahl des normalen Leerlaufmodus (N) bewirkt.

15. Vorrichtung nach einem der vorangehenden Ansprüche, **dadurch gekennzeichnet, dass** sie eine Anzeigevorrichtung umfasst, die die ausgewählte Stellung, die anderen auswählbaren Stellungen und den gegebenenfalls manuell ausgewählten Vorwärtsgang anzeigt.

## Claims

1. One-touch control device of a controlled automatic gearbox of a motor vehicle, comprising a control lever (10) :
- which has a single stable position (H) into which it is returned whatever the position previously occupied by the control lever (10);
- which, from this single stable position (H), may occupy positions for selecting different modes (N, D, R) including a position (D) for selecting an automatic normal drive mode, a position (R) for selecting an automatic normal reverse mode, and a position (N) for selecting a normal neutral mode (N);
- and which from this single stable position (H) may occupy positions (+, -) for manually selecting different forward gears;
**characterized in that**
- the device only allows a forward gear to be manually selected (+, -) when said automatic normal drive mode (D) has been previously selected;
- when the control lever (10) is held in a position for manually selecting a forward gear for a period shorter than a predefined threshold value (T0), the corresponding gear is selected and after release of the control lever (10), the gearbox returns to said automatic normal drive mode (D);
- when the control lever (10) is held in a position for manually selecting a forward gear for a period longer than said predefined threshold value (T0), the corresponding gear is selected and the gearbox is in a permanent manual forward gear selection mode.

2. Device according to Claim 1, **characterized in that** it comprises a first longitudinal selection slot (C1) in which the control lever (10) may be displaced manually and in which said single stable position (H) is located, the control lever being able to be displaced therefrom in order to occupy at least one of said positions (+, -) for manually selecting different forward gears.

3. Device according to Claim 2, **characterized in that** from said single stable position (H) the control lever is displaced in the longitudinal direction (L) of said first slot (C1):
- in a first direction (L1) toward a first end of travel position for changing into a lower manual forward gear (-);
- in a second direction (L2), the opposite of said first direction, toward a second end of travel position for changing into a higher manual forward gear (+).

4. Device according to Claim 1, **characterized in that** when the gearbox is in a permanent manual forward gear selection mode (D), and from said single stable position (H), the control lever is displaced in a transverse direction (T) which is different from said longitudinal direction (L) to implement the return of the gearbox into one of said automatic modes (N, D, R).

5. Device according to Claim 4, **characterized in that** said displacement of the control lever (10) in said transverse direction (T) implements the return of the gearbox into a normal neutral mode (N).

6. Device according to Claim 5, **characterized in that** it comprises a second selection slot (C2) in which the control lever (10) may be displaced manually and in which said position for selecting the normal neutral mode (N) is located, and **in that** the control lever (10) may be displaced from said position for selecting the normal neutral mode (N) in order to occupy at least one other position for selecting an automatic mode (D, R).

7. Device according to Claim 6, **characterized in that** the control lever (10) is displaced from said position for selecting the normal neutral mode (N) in the longitudinal direction of said second slot (C2):
- in a first direction (L1) toward a first position (R) for selecting the automatic normal reverse mode;
- in a second direction (L2), the opposite of said first direction, toward a second position (D) for selecting the automatic normal drive mode.

8. Device according to one of Claims 6 or 7, taken in combination with one of Claims 2 or 3, **characterized in that** said first and second slots (C1, C2) are parallel.

9. Device according to Claim 8, taken in combination with Claims 3 and 7, **characterized in that** said first directions are identical.

10. Device according to Claim 9, **characterized in that**:
- when the speed of the vehicle is lower than a determined speed threshold value (V0);
- and when said automatic normal drive mode (D) has been previously selected,
the displacement of the control lever (10) into a position (-) for manually selecting the change into a lower manual forward gear (-) implements the selection of said normal neutral mode (N).

11. Device according to Claim 9, **characterized in that**:
- when the speed of the vehicle is non-zero and is lower than a determined speed threshold value (V0);
- and when said automatic normal drive mode (D) has been previously selected,
the displacement of the control lever (10) into a position (+) for manually selecting the change into a higher manual forward gear (+) implements the selection of said normal neutral mode (N).

12. Device according to Claim 9, **characterized in that**:
- when the speed of the vehicle is zero;
- and when said automatic normal drive mode (D) has been previously selected,
the displacement of the control lever (10) into a position (+) for manually selecting the change into a higher manual forward gear (+) implements the change into a higher manual forward gear (+).

13. Device according to Claim 9, **characterized in that** when the automatic normal reverse mode (R) has been previously selected, the displacement of the control lever (10) into a position (-) for manually selecting the change into a lower manual forward gear (-) implements the selection of said normal neutral mode (N).

14. Device according to Claim 9, **characterized in that** when the automatic normal reverse mode (R) has been previously selected, the displacement of the control lever (10) into a position (+) for manually selecting the change into a higher manual forward gear (+) implements the selection of said normal neutral mode (N).

15. Device according to any one of the preceding claims, **characterized in that** it comprises a display device which displays the selected position, said other positions able to be selected and, where applicable, the forward gear manually selected.
